# FASCICULE DE BREVET EUROPEEN

(11) **EP 0 887 960 B1**
(45) Date de publication et mention de la délivrance du brevet: **07.12.2005**
(21) Numéro de dépôt: 98410074.3
(22) Date de dépôt: 26.06.1998
(51) Int. Cl.: H04J 3/06, H04B 7/26

(54) **Circuit d'émission-réception pour relier une station de base à une centrale de commande de station de base selon la norme DECT**
Sende/Emfangsschaltung zur Verbindung einer Basisstation mit einer Basisstationssteureinheit gemäss DECT Norm
Transceiver circuit for connection of a base station to a base station controller according to the DECT standard

(30) Priorité: 27.06.1997 FR 9708364
(43) Date de publication de la demande: 30.12.1998
(73) Titulaire: STMicroelectronics S.A., 92120 Montrouge (FR)
(72) Inventeur: Fensch, Thierry, 38000 Grenoble (FR)
(74) Mandataire: de Beaumont, Michel

(56) Documents cités:
- EP-A- 0 505 281
- EP-A- 0 666 677
- EP-A- 0 680 170
- EP-A- 0 751 634
- US-A- 4 355 387

## Description

La présente invention concerne un circuit d'émission-réception, dit interface U, destiné à une transmission NUMERIS. L'invention concerne plus particulièrement l'utilisation d'un tel circuit sur les lignes reliant des stations de base à une centrale de commande des stations de base dans un réseau de radiotéléphonie selon la norme DECT.

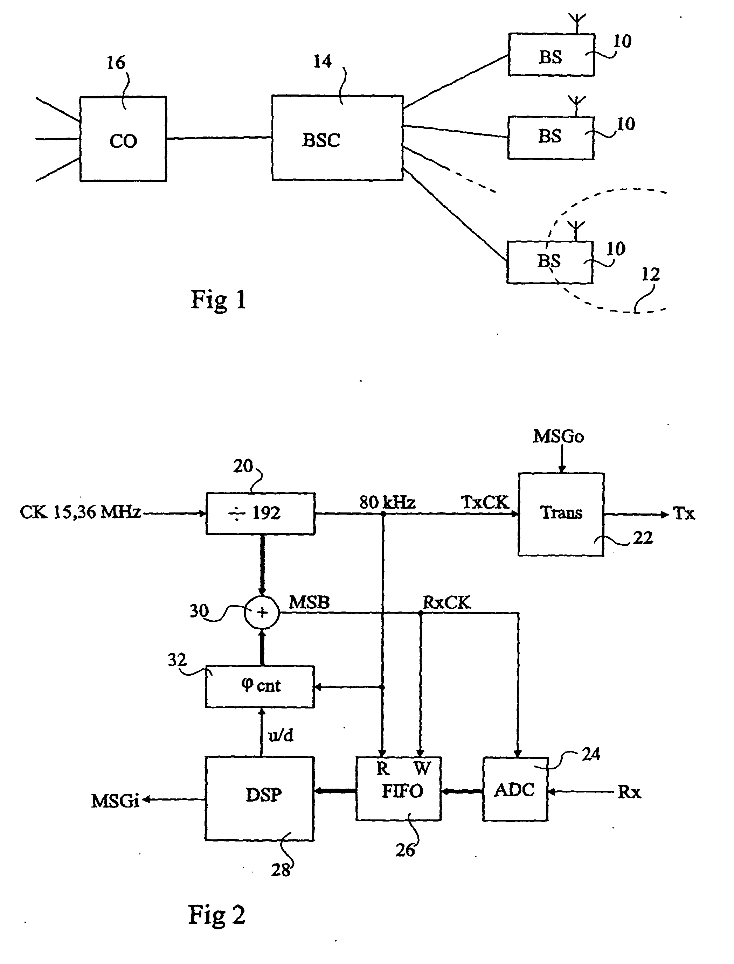

La figure 1 représente schématiquement et partiellement un réseau téléphonique DECT. Ce réseau comprend un ensemble de stations de base 10 dont chacune couvre une cellule 12 dans laquelle un utilisateur peut correspondre avec la station de base par communication radio. Les stations de base sont reliées à une centrale de commande commune 14, elle-même reliée à un autocommutateur 16.

Les lignes entre les stations de base et la centrale de commande introduisent des retards de transmission différents, dus aux longueurs différentes des lignes. En outre, le retard introduit par une ligne est susceptible de varier, notamment en fonction de la température.

Lorsqu'un utilisateur sort d'une cellule 12 couverte par une première station de base 10, il entre normalement dans une cellule adjacente couverte par une nouvelle station de base. Ainsi, la communication téléphonique doit pouvoir être reprise par la nouvelle station de base sans perturbation. Toutefois, les lignes de la station initiale et de la nouvelle station peuvent introduire des retards si différents qu'ils perturbent notablement la communication, allant jusqu'à l'interrompre.

Par conséquent, la centrale de commande 14 doit connaître les retards introduits par chacune des lignes la reliant à une station de base, afin de gérer convenablement le passage d'une communication d'une ligne vers l'autre.

On souhaite dans une telle situation pouvoir mesurer les différents retards introduits par les lignes au niveau des circuits d'émission-réception de la centrale de commande 14.

La figure 2 représente partiellement et schématiquement un circuit d'émission-réception, ou interface U, classique, tel que celui décrit dans la demande de brevet européen 0 680 170. La figure 2 représente plus particulièrement les éléments destinés à reconstruire un signal d'horloge de réception à partir des données reçues sur la ligne.

Ce circuit comprend un diviseur 20 (un compteur jusqu'à 192) générant un signal d'horloge interne de 80 kHz à partir d'un signal CK de 15,36 MHz. Ce signal d'horloge interne constitue l'horloge d'émission TxCK. Cette horloge d'émission cadence un circuit d'émission 22 qui se charge de former des trames d'émission Tx à partir de messages sortants MSGo. Les trames entrantes Rx sont fournies à un convertisseur analogique-numérique 24 qui est cadencé par une horloge de réception RxCK pour échantillonner chaque bit entrant. Les échantillons sont fournis par le convertisseur 24 à une mémoire de type premier-entré-premier-sorti (FIFO) 26 avant d'être délivrés à un processeur de signal numérique (DSP) 28. La mémoire FIFO 26 est sélectionnée en écriture par l'horloge de réception RxCK et sélectionnée en lecture par l'horloge interne TxCK. Le processeur de signal 28 régénère le message entrant MSGi à partir des échantillons lus dans la mémoire FIFO 26.

L'horloge RxCK varie à la fréquence d'une somme numérique produite par un additionneur 30 qui reçoit, sur une première entrée, le contenu du diviseur 20 et, sur une deuxième entrée, le contenu d'un compteur 32 contenant une information de phase ϕ. Le contenu du compteur 32 varie modulo le taux de division (192) du diviseur 20. L'additionneur 30 fournit également une valeur modulo ce taux de division. Le signal RxCK est constitué, par exemple, du bit de poids le plus fort MSB produit par l'additionneur 30.

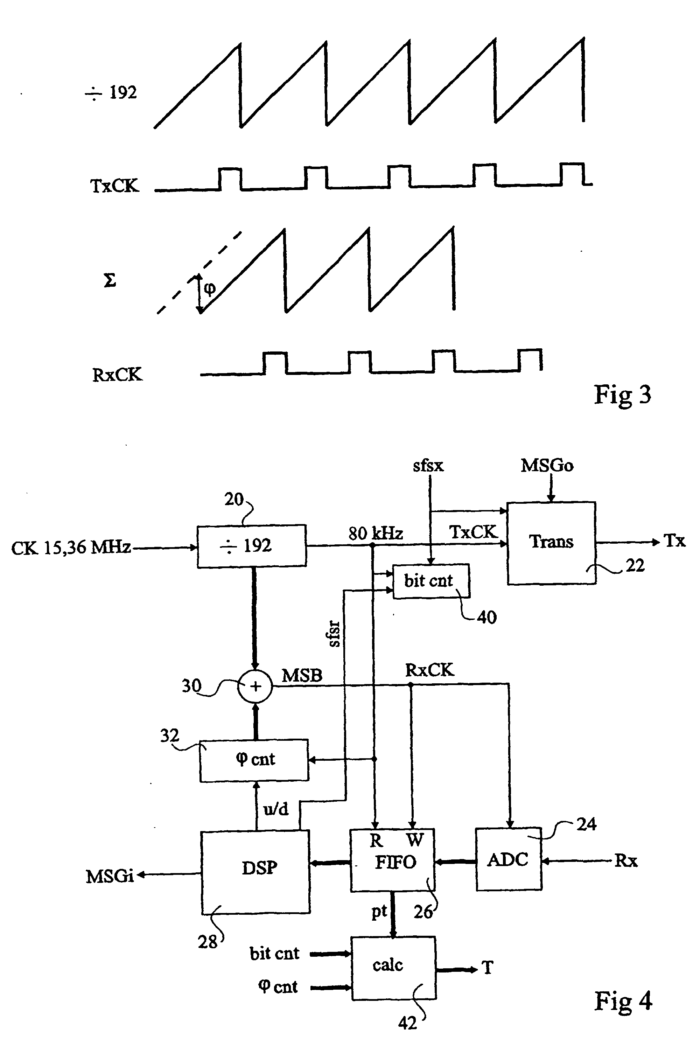

Avec cette configuration, la phase du signal RxCK par rapport au signal TxCK est déterminée par le contenu du compteur 32, comme cela sera décrit en relation avec la figure 3.

Le processeur de signal 28 analyse les échantillons fournis par le convertisseur 24 et modifie le contenu du compteur 32 afin que l'horloge RxCK échantillonne le signal entrant Rx au niveau de ses amplitudes maximales et minimales. Dans cet exemple, le processeur de signal 28 modifie le contenu du compteur 32 par une mise en mode comptage ou décomptage u/d, le compteur 32 étant cadencé par l'horloge TxCK.

Le processeur 28, le compteur 32 et l'additionneur 30 constituent en fait une boucle à verrouillage de phase numérique pour reconstruire le signal d'horloge de réception à partir du signal entrant Rx.

La figure 3 illustre l'évolution des contenus du diviseur 20 et de la somme Σ produite par l'additionneur 30 en fonction du temps. Le contenu du diviseur 20 évolue en dent de scie de 0 à 191. L'horloge TxCK correspond, par exemple, au bit de poids le plus fort du contenu du diviseur 20. Alors, il présente un état haut lorsque le contenu du diviseur 20 dépasse la valeur 128.

La somme Σ produite par l'additionneur 30 évolue également en dent de scie de 0 à 191, mais en déphasage par rapport au contenu du diviseur 20 d'une valeur correspondant au contenu ϕ du compteur 32. En fait, la valeur ϕ est soustraite au contenu du diviseur 20 pour produire un retard de phase du signal Σ, tel que la somme Σ soit nulle lorsque le contenu du diviseur 20 est égal à ϕ. Comme le signal TxCK, le signal RxCK présente un état haut lorsque la somme Σ dépasse 128.

Un objet de la présente invention est de compléter un circuit d'émission-réception classique afin de lui permettre de mesurer le retard introduit par la ligne téléphonique à laquelle il est relié.

La présente invention concerne plus spécifiquement un circuit d'émission-réception maître destiné à être couplé par une ligne téléphonique à un circuit d'émission-réception esclave, le circuit maître comprenant une boucle à verrouillage de phase numérique destinée à reconstruire une horloge à partir d'un flux de bits entrants, la différence de phase entre l'horloge reconstruite et une horloge interne correspondant au contenu d'un compteur de phase de la boucle à verrouillage de phase. Le circuit comprend un compteur de bits cadencé par l'horloge interne, initialisé lors de l'émission d'un signal prédéterminé, et arrêté lors de la détection du retour du signal prédéterminé réémis par le circuit émetteur/récepteur esclave ; et des moyens pour calculer le retard introduit par la ligne téléphonique à partir des contenus des compteurs de phase et de bits.

Selon un mode de réalisation de la présente invention, le circuit comprend une mémoire de type premier-entré-premier-sorti (FIFO), dans laquelle des échantillons numériques correspondant aux bits reçus sont écrits à la cadence de l'horloge reconstruite et dans laquelle les échantillons sont lus à la cadence de l'horloge interne pour être analysés par la boucle à verrouillage de phase numérique. La détection du retour du signal prédéterminé s'effectue en aval de la mémoire FIFO, ledit retard étant corrigé en fonction de la différence entre les pointeurs de lecture et d'écriture de la mémoire FIFO.

Selon un mode de réalisation de la présente invention, le signal prédéterminé est un signal de synchronisation de supertrame.

Selon un mode de réalisation de la présente invention, le circuit est connecté sur une ligne reliant une station de base à une centrale de commande de station de base dans un réseau de radiotéléphonie selon la norme DETC.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement et partiellement un réseau radiotéléphonique selon la norme DETC ;
la figure 2 représente un circuit d'émission-réception classique auquel s'applique la présente invention ;
la figure 3 illustre des évolutions de contenus de compteurs et de signaux du circuit de la figure 2 ;
la figure 4 représente un exemple de modifications du circuit de la figure 2 pour mettre en oeuvre la présente invention ; et
les figures 5A à 5C sont destinées à illustrer l'influence de la mémoire FIFO du circuit de la figure 2 sur le calcul du retard des lignes, dans différents cas.

La présente invention s'applique à une ligne téléphonique reliant deux circuits d'émission-réception numériques de type interface U, l'un des circuits d'émission-réception étant maître et l'autre esclave. Le circuit maître est prévu pour périodiquement émettre des données de synchronisation que le circuit esclave réémet vers le circuit maître. Pour mesurer le délai introduit par une ligne téléphonique, la présente invention propose, dans un circuit d'émission-réception maître, de mesurer le temps que mettent des données de synchronisation à revenir. On choisira, de préférence, les données de synchronisation de supertrame qui sont émises avec une période relativement longue (12 ms) mais suffisante pour pouvoir suivre d'éventuelles variations du retard introduit par la ligne, dues aux variations de température, par exemple.

A la figure 4, le circuit d'émission-réception du type décrit en relation avec la figure 2 comprend un compteur de bits 40 cadencé au signal d'horloge interne TxCK. Ce compteur 40 est initialisé lorsqu'un signal de synchronisation de supertrame SFSX est fourni au circuit d'émission 22. Le compteur 40 est arrêté lorsque le processeur de signal 28 émet un signal sfsr indiquant qu'il a détecté le retour du signal de synchronisation de supertrame. Ainsi, dès que le processeur 28 émet le signal sfsr, le compteur 40 contient le nombre de périodes de l'horloge TxCK, ou le nombre de bits, séparant la fourniture du signal sfsx au circuit d'émission 22 et la fourniture du signal sfsr par le processeur 28. Ce nombre de cycles correspond au double du retard introduit par la ligne téléphonique, augmenté des temps de latence du circuit d'émission 22, du circuit d'émission-réception esclave à l'autre extrémité de la ligne, du convertisseur 24, de la mémoire FIFO 26, et du processeur de signal 28. Il faut également tenir compte de ces temps de latence pour pouvoir convenablement transférer une communication d'une ligne à une autre lorsque l'utilisateur se déplace entre deux cellules.

Toutefois, le contenu du compteur 40, qui est mis à jour à la fréquence de l'horloge interne TxCK (80 kHz), ne fournit qu'une résolution de 12,5 µs, ce qui est insuffisant, car le retard doit être calculé à ± 300 ns.

Un aspect de la présente invention est d'utiliser le contenu du compteur de phase 32 pour atteindre une précision suffisante de la mesure. Si l'horloge interne TxCK et l'horloge reconstruite RxCK sont en phase, le retard peut s'exprimer de manière précise en un nombre entier de cycles de l'horloge interne. Si le retard introduit par la ligne augmente, ce retard se traduit par un retard de phase de l'horloge reconstruite par rapport à l'horloge interne. Le compteur de phase 32 contient justement une valeur correspondant à ce retard de phase. Bien que le compteur 32 soit cadencé à une horloge lente (TxCK), son contenu définit le retard de phase avec une résolution égale à la période, c'est-à-dire 65 ns, du signal d'horloge CK qui cadence le diviseur 20.

Ainsi, une mesure précise T du retard introduit par la ligne et les éléments de traitement intermédiaires est fournie, selon la présente invention, par la somme des contenus du compteur de bits 40 et du compteur de phase 32, pondérés respectivement par les périodes des signaux TxCK et CK (12,5 µs et 65 ns). On pourra pour cela prévoir un circuit de calcul 42, interne ou externe au circuit d'émission-réception, qui reçoit les contenus des compteurs 32 et 40 et effectue les calculs adéquats pour fournir la mesure T, éventuellement égale à la somme pondérée diminuée des temps de latence connus des éléments intermédiaires, exprimés en cycles entiers de l'horloge interne TxCK.

Un tel calcul fournit des résultats convenables lorsque la mémoire FIFO 26 est omise, c'est-à-dire si l'on accepte de perdre des bits lors de l'établissement d'une communication.

Si la mémoire FIFO 26 est présente, il s'avère que celle-ci introduit un retard constant pendant une communication mais qui est fixé de manière aléatoire à l'établissement de la communication.

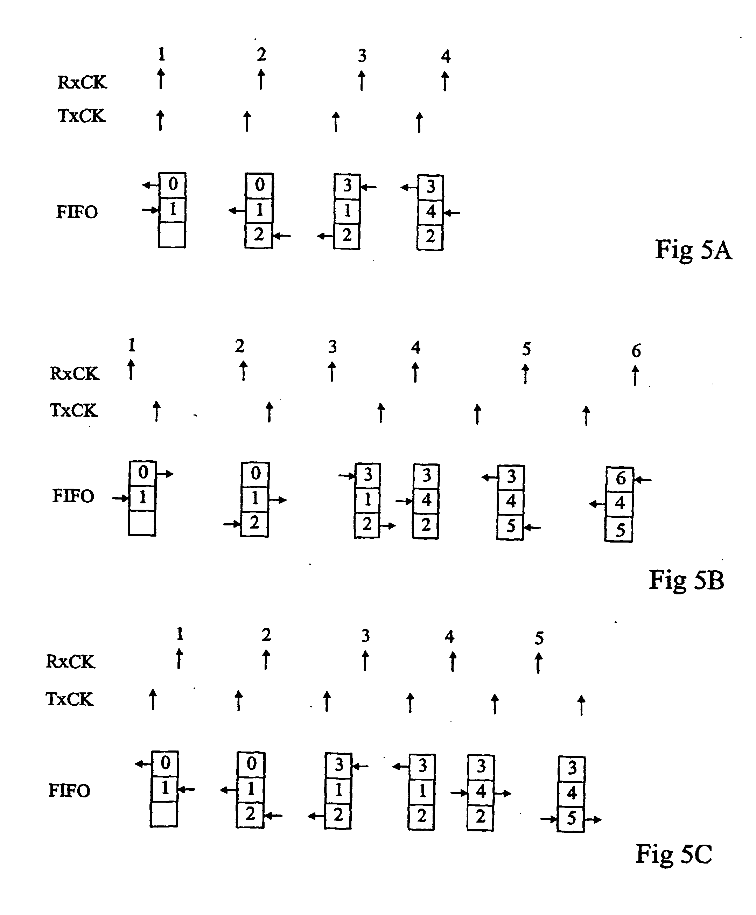

Les figures 5A à 5C sont destinées à illustrer ce phénomène. Ces figures représentent sous forme de flèches verticales les impulsions des horloges RxCK et TxCK et illustrent l'utilisation de la mémoire FIFO 26, constituée par exemple de trois registres pour stocker les échantillons fournis par le convertisseur 24. Les échantillons des bits entrants, arrivant en synchronisme avec les impulsions de l'horloge reconstruite RxCK, sont numérotés par ordre d'arrivée.

A chaque impulsion de l'horloge RxCK, on écrit l'échantillon courant dans la mémoire FIFO, ce qui est indiqué par une flèche entrante. A chaque impulsion de l'horloge TxCK, on lit dans la mémoire FIFO un échantillon précédemment écrit, ce qui est indiqué par une flèche sortante. Les positions des flèches entrantes et sortantes représentent les pointeurs d'écriture et de lecture. Chacun de ces pointeurs est incrémenté à chaque accès, les incrémentations s'effectuant dans les figures du haut vers le bas, avec bien entendu un rebouclage sur le registre du haut une fois que le pointeur a parcouru tous les registres. Par ailleurs, lorsque deux accès ne sont pas simultanés, une flèche à gauche indique le premier accès et une flèche à droite indique le deuxième.

A la figure 5A, les horloges RxCK et TxCK sont initialement en phase, alors que, en régime établi, l'horloge RxCK est légèrement en retard par rapport à l'horloge TxCK. Dans le cas de la figure 5A, la période de l'horloge RxCK varie progressivement de manière que chaque impulsion d'horloge RxCK se produit légèrement en retard à proximité d'une impulsion correspondant de l'horloge TxCK. A partir de la troisième impulsion, l'horloge RxCK se trouve dans sa relation de phase définitive par rapport à l'horloge TxCK.

Pour le premier échantillon, on accède simultanément en écriture au deuxième registre de la mémoire FIFO et en lecture au premier registre de la mémoire FIFO. Pour le deuxième échantillon, on accède d'abord en lecture au deuxième registre puis en écriture au troisième registre. En régime établi, c'est-à-dire à partir du troisième échantillon, on écrit l'échantillon courant tandis que l'on lit l'échantillon immédiatement précédent. En conséquence, le retard introduit par la mémoire FIFO est d'un cycle de l'horloge TxCK.

A la figure 5B, l'horloge RxCK est initialement en avance de phase par rapport à l'horloge TxCK alors que, en régime établi, cette horloge RxCK est en retard. Dans cet exemple, la période de l'horloge RxCK est progressivement réduite pour être de nouveau augmentée afin d'atteindre le régime établi. On remarquera que l'horloge RxCK présente une impulsion de trop par rapport à l'horloge TxCK. Cette impulsion supplémentaire, par exemple la quatrième, provoque l'écriture du quatrième échantillon dans un registre de la mémoire FIFO alors qu'aucun échantillon correspondant n'est lu. Le régime établi est atteint à partir de la cinquième impulsion de l'horloge RxCK, la quatrième impulsion, excédentaire, ayant provoqué un décalage des pointeurs de lecture et écriture de manière que l'échantillon lu dans la mémoire FIFO précède de deux rangs l'échantillon en cours d'écriture. En d'autres termes, la mémoire FIFO introduit un retard de deux cycles, et ceci de manière permanente à partir du cinquième échantillon, jusqu'au prochain établissement de communication.

A la figure 5C, l'horloge RxCK est initialement en retard par rapport à l'horloge TxCK, alors que, en régime établi, le signal RxCK est en avance. On s'aperçoit que le signal RxCK présente une impulsion de moins que le signal TxCK. Il en résulte, par exemple entre les troisième et quatrième impulsions de l'horloge RxCK, que l'on effectue une lecture supplémentaire de la mémoire FIFO sans effectuer d'écriture correspondante. Alors, lorsque le signal RxCK est en régime établi, à partir de sa quatrième impulsion, l'échantillon en cours de lecture dans un registre de la mémoire FIFO est celui qui vient d'être écrit. En conséquence, la mémoire FIFO n'introduit ici aucun retard.

En conclusion, si on considère le cas de la figure 5A comme référence, la mémoire FIFO 26 introduit, en fonction des conditions de l'établissement d'une communication, un retard de plus ou moins un cycle de l'horloge TxCK. On doit bien entendu tenir compte de ce retard aléatoire pour fournir une indication convenable sur le retard introduit par la ligne.

Comme cela est représenté en figure 4, le circuit de calcul 42 reçoit également les pointeurs pt de lecture/écriture de la mémoire FIFO 26, la différence entre le pointeur d'écriture et le pointeur de lecture indiquant s'il faut corriger de plus ou moins un cycle la valeur calculée en fonction des contenus des compteurs 32 et 40. Plus spécifiquement, si la différence des pointeurs est égale à 1 (cas de la figure 5A), aucune correction n'est apportée. Si la différence est égale à 2 (cas de la figure 5B), on ajoute un cycle. Finalement, si la différence est égale à O (cas de la figure 5C), on soustrait un cycle.

Bien entendu, la mémoire FIFO 26 peut comprendre un nombre n quelconque de registres. Dans ce cas, la correction à apporter au retard calculé est choisie parmi n valeurs.

De nombreuses variantes et modifications de la présente invention apparaîtront à l'homme du métier. En particulier, la mémoire FIFO 26 peut être constituée d'un registre à décalage cadencé par l'horloge de réception reconstruite RxCK et commandé en lecture par un automate. On peut alors exploiter le contenu d'un registre d'état de l'automate pour savoir, le cas échéant, de quelle valeur il faut corriger le retard calculé.

## Revendications

1. Circuit d'émission-réception maître destiné à être couplé par une ligne téléphonique à un circuit d'émission-réception esclave, le circuit maître comprenant une boucle à verrouillage de phase numérique destinée à reconstruire une horloge (RxCK) à partir d'un flux de bits entrants, la différence de phase entre l'horloge reconstruite et une horloge interne (TxCK) correspondant au contenu (ϕ) d'un compteur de phase (32) de la boucle à verrouillage de phase :
- un compteur de bits (40) cadencé par l'horloge interne, initialisé lors de l'émission d'un signal prédéterminé (sfsx), et arrêté lors de la détection du retour (sfsr) du signal prédéterminé réémis par le circuit émetteur/récepteur esclave ; et
- des moyens (42) pour calculer le retard introduit par la ligne téléphonique à partir des contenus des compteurs de phase et de bits.

2. Circuit d'émission-réception selon la revendication 1, **caractérisé en ce qu'**il comprend une mémoire de type premier-entré-premier-sorti (FIFO 26), dans laquelle des échantillons numériques correspondant aux bits reçus sont écrits à la cadence de l'horloge reconstruite (RxCK) et dans laquelle les échantillons sont lus à la cadence de l'horloge interne (TxCK) pour être analysés par la boucle à verrouillage de phase numérique ;
la détection du retour (sfsr) du signal prédéterminé s'effectuant en aval de la mémoire FIFO, ledit retard étant corrigé en fonction de la différence entre les pointeurs de lecture et d'écriture de la mémoire FIFO.

3. Circuit d'émission-réception selon la revendication 1 ou 2, **caractérisé en ce que** le signal prédéterminé est un signal de synchronisation de supertrame (sfsx).

4. Circuit d'émission-réception selon l'une quelconque des revendications 1 à 3, **caractérisé en ce qu'**il est connecté sur une ligne reliant une station de base à une centrale de commande de station de base dans un réseau de radiotéléphonie selon la norme DETC.

## Patentansprüche

1. Master-Transceiver-Schaltungsmittel zur Kopplung an eine Telefonleitung mit einer Slave-Transceiver-Schaltung, wobei die Masterschaltung eine digitale phasenverriegelte Schleife zum Rekonstruieren eines Taktes (RxCK) von einem ankommenden Bitstrom umfasst, wobei die Phasendifferenz zwischen dem rekonstruierten Takt und einem internen Takt (TxCK) dem Inhalt (ϕ) eines Phasenzählers (32) der Phasenverriegelungsschleife entspricht, wobei die Schaltungsmittel Folgendes aufweisen:
einen Bitzähler (40), der durch den internen Takt getaktet wird, der bei der Übertragung eines vorbestimmten Signals (sfsx) initialisiert wird, und der gestoppt wird beim Detektieren der Antwort (sfsr) auf das vorbestimmte Signal, das durch die Slave-Transceiver-Schaltung zurückübertragen wird; und
Mittel (42) zum Berechnen der Verzögerung, die durch die Telefonleitung eingefügt wurde, basierend auf den Inhalten der Phasen- und Bitzähler.

2. Transceiver-Schaltung nach Anspruch 1, die einen Speicher (26) des FIFO-Typs umfasst, wobei digitale Proben oder Samples entsprechend den empfangenen Bits mit der Rate des rekonstruierten Taktes (RxCK) geschrieben werden, und wobei die Samples mit der Rate des internen Taktes (TxCK) ausgelesen werden für die Analyse durch die digitale phasenverriegelte Schleife;
wobei die Detektierung der Antwort (sfsr) des vorbestimmten Signals stromabwärts bezüglich des FIFO-Speichers durchgeführt wird, wobei die Verzögerung gemäß dem Unterschied zwischen den Lese- und Schreibzeigern bzw. Pointern des FIFO-Speichers korrigiert wird.

3. Transceiver-Schaltung nach Anspruch 1 oder 2, wobei das vorbestimmte Signal ein Superframe-Synchronisationssignal (sfsx) ist.

4. Transceiver-Schaltung nach einem der Ansprüche 1 bis 3, die mit einer Leitung verbunden ist, die eine Basisstation mit einer Basisstationssteuerung in einem Funktelefonnetzwerk gemäß einem DECT-Standard verbindet.

## Claims

1. A master transceiver circuit meant to be coupled by a telephone line to a slave transceiver circuit, the master circuit including a digital phase-locked loop for reconstructing a clock (RxCK) from an incoming bit flow, the phase difference between the reconstructed clock and an internal clock (TxCK) corresponding to the content (ϕ) of a phase counter (32) of the phase-locked loop, including:
- a bit counter (40) clocked by the internal clock, initialized upon transmission of a predetermined signal (sfsx), and stopped upon detection of the return (sfsr) of the predetermined signal transmitted back by the slave transceiver circuit; and
- means (42) for calculating the delay introduced by the telephone line based on the contents of the phase and bit counters.

2. The transceiver circuit of claim 1, including a FIFO-type memory (26), wherein digital samples corresponding to the received bits are written at the rate of the reconstructed clock (RxCK) and in which the samples are read at the rate of the internal clock (TxCK) to be analyzed by the digital phase-locked loop;
the detection of the return (sfsr) of the predetermined signal being performed downstream of the FIFO memory, the delay being corrected according to the difference between the read and write pointers of the FIFO memory.

3. The transceiver circuit of claim 1 or 2, wherein the predetermined signal is a superframe synchronization signal (sfsx).

4. The transceiver circuit of any of claims 1 to 3, connected on a line connecting a base station to a base station controller in a radiotelephony network according to a DECT standard.
